# EUROPÄISCHE PATENTSCHRIFT

(11) **EP 2 516 210 B1**
(45) Veröffentlichungstag und Bekanntmachung des Hinweises auf die Patenterteilung: **16.11.2016**
(21) Anmeldenummer: 10795218.6
(22) Anmeldetag: 06.12.2010
(51) Int. Cl.: B60N 2/30, B60N 2/36, B60N 2/22

(54) **LEHNENKLAPPMECHANISMUS FÜR EINEN FAHRZEUGSITZ**
BACKREST FOLDING MECHNANISM FOR A VEHICLE SEAT
MÉCANISME DE RABATTEMENT DE DOSSIER POUR UN SIÈGE DE VÉHICULE

(30) Priorität: 24.12.2009 DE 102009060356
(43) Veröffentlichungstag der Anmeldung: 31.10.2012
(73) Patentinhaber: Sitech Sitztechnik GmbH, 38442 Wolfsburg (DE)
(72) Erfinder: JOCKEL, Fabian, 38162 Weddel (DE)
(86) Internationale Anmeldenummer: PCT/EP2010/007393
(87) Internationale Veröffentlichungsnummer: WO 2011/076334

(56) Entgegenhaltungen:
- JP-A- 2006 347 463

## Beschreibung

Die Erfindung betrifft einen Fahrzeugsitz mit einem fernentriegelbaren Lehnenklappmechanismus mit den im Oberbegriff des Anspruchs 1 genannten Merkmalen, insbesondere eine Fahrzeug-Hintersitzanlage mit einer ein- oder mehrteiligen umklappbaren Rückenlehne.

Aus der US 5 662 369 A ist eine umklappbare Rückenlehne für den Hintersitz eines Fahrzeugsitzes bekannt, die einen Verriegelungsmechanismus aufweist, der manuell über einen Bowdenzug fernentriegelbar ist, wobei die Entriegelung von zwei Betätigungselementen ausgeht, wobei ein Betätigungselement im Bereich eines Vordersitzes und ein anderes Betätigungselement im Bereich des Kofferraumes angeordnet ist. Das Umklappen der Hintersitzrückenlehne nach vorne auf das Hintersitzsitzteil erfolgt nach der Fernentriegelung selbsttätig durch ein vorgespanntes Federelement. Eine Rückstellung in die vertikale Ausgangsposition gegen dessen Federkraft ist möglich, erfordert aber einen erhöhten Kraftaufwand für die Bedienperson, da zusätzlich zur Gewichtskraft der Hintersitzrückenlehne auch die Federkraft des starken Federelements überwunden werden muss.

Ein weiterer Lehnenklappmechanismus ist aus der JP 2006 347463 A bekannt, welcher als Ausgangspunkt und nächstliedender Stand der Technik für die vorliegende Erfindung angesehen werden kann.

Der Erfindung liegt nun die Aufgabe zugrunde, einen alternativen verbesserten Lehnenklappmechanismus anzubieten, bei dem eine Rückenlehne von einer fern liegenden Position entriegelbar und von dieser Position aus durch eine gezielte Betätigung eines Bedieners umklappbar ist. Der erfindungsgemäße Lehnenklappenmechanismus soll grundsätzlich auch ohne Einsatz eines vorgespannten Federelements so auslegbar sein, dass eine Rückenlehne von einer fern liegenden Position aus umklappbar ist. Zur Komforterhöhung soll es möglich sein, den grundsätzlich ohne Einsatz eines vorgespannten Federelementes einsetzbaren Lehnenklappmechanismus zum Umklappen der Rückenlehne mit einem Federelement zur Unterstützung des Umklappens zu kombinieren.

Zu beachten ist, dass zum Klappen von Rückenlehnen meist hohe Kräfte benötigt werden, da teilweise neben den zu überwindenden Gewichtskräften auch Reibungskräfte überwunden werden müssen, die durch eine seitliche Anlage zu angrenzenden Bauteilen, insbesondere im Polsterbereich verursacht werden. Die Kräfte, die bei der Rückenlehnenklappung benötigt werden, sind somit über den Klappwinkel nicht konstant und sogar sehr stark schwankend und stellenweise sehr groß. Gerade für Lehnenklappmechanismen, die mit Hilfe von Federelementen eine Klappung bewirken, sind solche Schwankungen hinsichtlich der benötigten Kräfte bei der Auswahl der Federelemente nur bedingt berücksichtigbar. Entweder das Federelement ist zu stark ausgelegt oder zu schwach ausgelegt, wodurch gegebenenfalls gerade dann wenn das Federelement zu schwach ausgelegt ist die Gefahr besteht, dass die Rückenlehne beispielsweise seitlich in einem etwas seitlich hervorstehenden Polsterbereich durch erhöhte Reibungskräfte gegenüber einer seitlichen Karosserie hängen bleibt.

Die Erfindung geht von einem Lehnenklappmechanismus für einen Fahrzeugsitz mit einer Rückenlehne, insbesondere einer ein- oder mehrteiligen Hintersitzlehne aus, der ein fern von der Rückenlehne angeordnetes Betätigungselement aufweist, das auf den Lehnenklappmechanismus einwirkt, um ein Ver- und Entriegelungselement der Rückenlehne gegenüber einem mit dem Ver- und Entriegelungselement in Wirkverbindung stehenden karosserieseitigen Halteelement fern zu entriegeln, wonach die Rückenlehne aus einer im Wesentlichen vertikalen oder gegenüber einer Vertikalen leicht geneigten Ausgangsposition in eine Umklappposition bringbar ist.

Erfingdungsgemäß ist vorgesehen, dass die Verlagerung des Betätigungselementes zunächst in einem ersten Entriegelungsschritt der Rückenlehne über einen ersten Bowdenzug auf einen an der Rückenlehne angeordneten Umwerfer einwirkt, der gleichzeitig ein zwischen dem Umwerfer und dem Ver- und Entriegelungselement angeordnetes Zugelement mitnimmt und die sich noch in der Ausgangsposition befindliche Rückenlehne fernentriegelt, wonach eine weitere Verlagerung des Betätigungselementes in einem zweiten Anklappschritt der Rückenlehne über den ersten Bowdenzug nochmals derart auf den Umwerfer einwirkt, dass der Umwerfer die Rückenlehne über ihren vertikalen Totpunkt hinaus mitnimmt, wodurch die Rückenlehne in einem nachfolgenden dritten Umklappschritt in die Umklappposition umgeworfen wird.

Erfindungsgemäß ist der Umwerfer eine Umwerferrolle, die seitlich der Rückenlehne auf einer quer zur Fahrtrichtung liegenden karosseriefesten Achse, auf der auch die Rückenlehne geklappt wird, in bestimmten Grenzen gegenüber einer Karosserie und gegenüber der Rückenlehne frei drehbar angeordnet ist.

Die Umwerferrolle weist dazu erstens eine erste, obere Nut auf, in die ein lehnenfester Bolzen eingreift und weist zweitens eine zweite, untere Nut auf, in die ein karosseriefester Bolzen eingreift, wobei die Bolzen bei der Betätigung des Lehnenklappmechanismus jeweils beidseitig in den zugehörigen Nuten Anschläge bilden, welche die Drehung der Umwerferrolle gegenüber der Karosserie und gegenüber der Rückenlehne begrenzen.

Der erste Bowdenzug und ein als Zugelement verwendeter zweiter Bowdenzug sind im Detail innerhalb des Lehnenklappmechanismus bevorzugt folgendermaßen angeordnet.

Die Bowdenzugseele des ersten Bowdenzuges ist über Bowdenzuganbindungen einerseits mit dem Betätigungselement und andererseits mit dem Umwerfer verbunden, während der Bowdenzugmantel des ersten Bowdenzuges über mindestens eine Bowdenzugbefestigung an der schwenkbaren Rückenlehne befestigt ist.

Die Bowdenzugseele des zweiten Bowdenzuges ist über Bowdenzuganbindungen einerseits mit dem Ver- und Entriegelungselement und andererseits mit dem Umwerfer verbunden, während der Bowdenzugmantel des zweiten Bowdenzuges über mindestens eine Bowdenzugbefestigung an der schwenkbaren Rückenlehne befestigt ist.

Als die ersten beiden Betätigungsschritte initiierendes Betätigungselement kommt in bevorzugter Ausgestaltung der Erfindung ein Hebel zum Einsatz, dessen Betätigungsrichtung im dreidimensionalen Raum frei wählbar ist, und dessen Betätigungsrichtung sowohl unabhängig von der gewünschten Richtung der Entriegelungsbewegung des Ver- und Entriegelungselementes gegenüber dem Haltelement als auch unabhängig von der Anklapprichtung der Rückenlehne ist, da die Betätigung des Betätigungselementes auf den mit dem ersten Bowdenzug verbundenen Umwerfer einwirkt, der die Kraft und die Kraftrichtung des ersten Bowdenzuges über den Umwerfer und den zweiten Bowdenzug auf das Ver- und Entriegelungselement und über die in die Nuten des Umwerfers eingreifenden Bolzen auf die Rückenlehne umlenkt.

Weitere bevorzugte Ausgestaltungen der Erfindung ergeben sich aus den übrigen, in den Unteransprüchen und in der Beschreibung genannten Merkmalen.

Die Erfindung wird nachfolgend in Ausführungsbeispielen anhand der zugehörigen Zeichnungen erläutert. Es zeigen:
- Figur 1: eine schematische Seitenansicht einer Rückenlehne mit einem fernentriegelbaren Lehnenklappmechanismus;
- Figur 2: eine schematische Seitenansicht der Rückenlehne mit dem fernentriegelbaren Lehnenklappmechanismus nach einem ersten Schritt zur Entriegelung der Rückenlehne;
- Figur 3: eine schematische Seitenansicht der Rückenlehne mit dem fernentriegelbaren Lehnenklappmechanismus nach einem zweiten Schritt zum Anklappen der Rückenlehne über ihren Totpunkt hinaus und
- Figur 4: eine schematische Seitenansicht der Rückenlehne mit dem fernentriegelbaren Lehnenklappmechanismus nach einem dritten Schritt nach dem Umklappen der Rückenlehne und
- Figur 5: eine schematische Seitenansicht der Rückenlehne mit dem fernentriegelbaren Lehnenklappmechanismus nach einem vierten Schritt nach dem Loslassen des Entriegelungshebels vor dem Aufrichten der Rückenlehne.

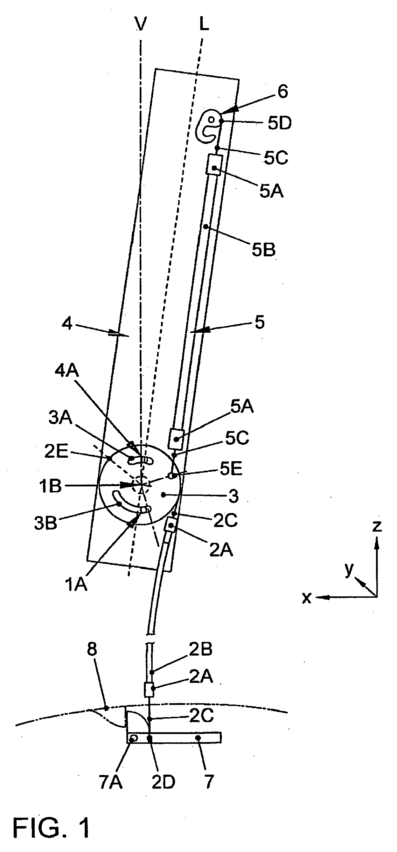

Festlegungen zu den Richtungsangaben der Figuren 1 bis 5. Die Anordnung eines Fahrzeugsitzes innerhalb eines Kraftfahrzeuges und dessen gewöhnliche Fahrtrichtung bestimmen die nachfolgenden Richtungsangaben. In beziehungsweise entgegen der Fahrtrichtung entspricht der x-Richtung, die vertikale Richtung in einem Fahrzeug ist mit der z-Richtung festgelegt, wobei die Achsen, die quer zur Fahrtrichtung verlaufen in γ-Richtung liegen.

Die Betätigungsrichtung eines zum Lehnenklappmechanismus gehörenden als Betätigungselement eingesetzten Hebels 7 kann, wie noch genauer erläutert wird, in vorteilhafter Weise frei gewählt werden. Aus der nachfolgenden Beschreibung wird deutlich, dass unabhängig von der Bewegungsrichtung des Hebels 7 seine Bewegung dazu führt, dass stets ein an dem Hebel 7 befestigter erster Bowdenzug 2 gezogen wird, der über die weiteren Bauteile des Lehnenklappmechanismus dafür sorgt, dass die Rückenlehne 4 in einem ersten Entriegelungsschritt zunächst zur Klappung frei gegeben wird.

Figur 1 zeigt eine erste schematische Seitenansicht einer Rückenlehne 4 mit dem fernentriegelbaren Lehnenklappmechanismus in ihrer Ausgangslage.

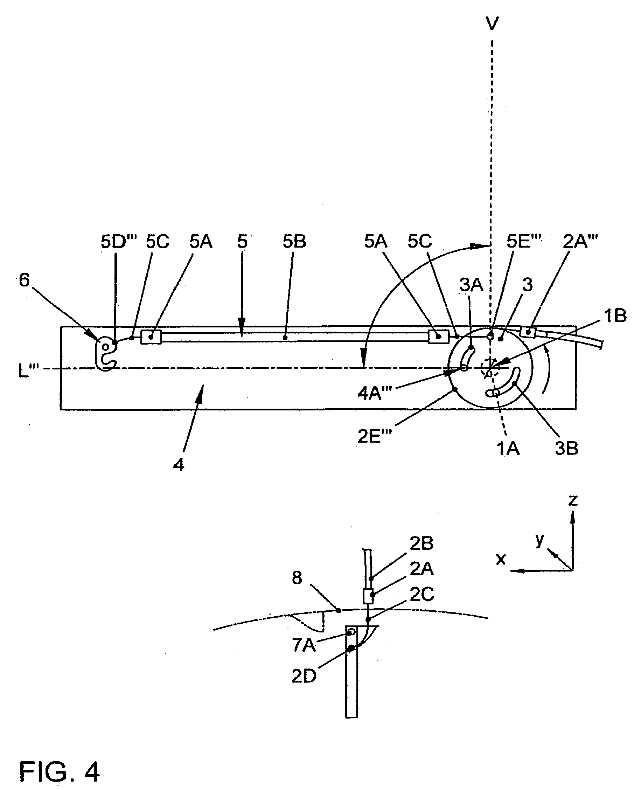

Die Rückenlehne 4 ist in ihrer Ausgangslage gegenüber der in z-Richtung liegenden vertikalen Achse V mit ihrer Lehnenachse L leicht nach hinten geneigt angeordnet. Die Rückenlehne 4 weist eine karosseriefeste Lehnenklappachse 1 B auf, die im dargestellten Beispiel quer zur Fahrtrichtung in γ-Richtung liegt. Die Rückenlehne 4 ist ausgehend von der Position der Figur 1 über die vertikale Achse V in eine horizontale Lage, gemäß Figur 4 schwenkbar und kann von dort wieder in die Ausgangslage der Figur 1 zurückgeschwenkt werden.

Bevor eine solche Verschwenkung beziehungsweise Klappung der Rückenlehne 4 möglich ist, muss ein Ver- und Entriegelungselement, im Ausführungsbeispiel ein Schlosshaken 6, gegenüber einem karosserieseitigen Bolzen oder dergleichen (der nicht dargestellt ist) entriegelt werden. Dieser Schlosshaken 6 ist im Ausführungsbeispiel seitlich der Rückenlehne 4 angeordnet.

Die Rückenlehne 4 weist ferner zur Umlenkung der eingeleiteten Kräfte, zum Entriegeln, Anklappen und Umwerfen der Rückenlehne 4 einen Umwerfer in der Art einer Umwerferrolle 3 auf, die gegenüber der Rückenlehne 4 in bestimmten Grenzen frei auf der karosseriefesten Achse 1 B der Rückenlehne 4 in und entgegen der Uhrzeigerrichtung drehbar angeordnet ist. Der mögliche Drehwinkel der Umwerferrolle 3 ist durch eine erste und zweite Nut 3A, 3B begrenzt.

In der ersten, oberen Nut 3A läuft ein lehnenfester Bolzen 4A, der den möglichen Drehwinkel begrenzt. In der zweiten, unteren Nut 3B läuft ein karosseriefester Bolzen 1A, der ebenfalls den Drehwinkel der Umwerferrolle 3 begrenzt. Die Bolzen 1A, 4A bilden mit ihren Enden in den Nuten 3A, 3B Zapfen, die in die Nuten 3A, 3B hineinstehen und am jeweiligen Ende der Nuten 3A, 3B einen Anschlag bilden können. in der Ausgangsiage der Figur 1 bildet der lehnenfeste Bolzen 4A zunächst noch keinen Anschlag an einem der beiden Enden der ersten Nut 3A. Auch der karosserieseitige Bolzen 1A befindet sich innerhalb der zweiten unteren Nut 3B noch nicht vollständig am rechten Ende der zweiten Nut 3B und bildet somit noch keinen Anschlag.

An der Umwerferrolle 3 ist ein erster Bowdenzug 2 und ein Zugelement 5 angeordnet. Als Zugelement 5 kommt in dem beschriebenen Ausführungsbeispiel ebenfalls ein Bowdenzug zum Einsatz, der nachfolgend als zweiter Bowdenzug 5 bezeichnet wird. Ein erster Bowdenzug 2 ist mit dem unterhalb der Rückenlehne 4 schematisch dargestellten Hebel 7 verbunden. Die Bowdenzugseele 2C des ersten Bowdenzuges 2 ist einerseits mit der Umwerferrolle 3 über eine Bowdenzuganbindung 2E verbunden. Dabei läuft die Bowdenzugseele 2C umwerferseitig rollenartig über die Umwerferrolle 3, die auf ihrer Stirnseite eine Nut zur Führung der Bowdenzugseele 2C aufweist. Andererseits ist die Bowdehzugseele 2C hebelseitig über die Bowdenzuganbindung 2D am Hebel 7 angebunden.

In der oberen und unteren Darstellung der Figur 1 ist jeweils diejenige Bowdenzugbefestigung 2A dargestellt, mittels welcher der Bowdenzugmantel 2B fest an der Rückenlehne 4 angeordnet ist.

Ein zweiter Bowdenzug 5 ist zwischen Schlosshaken 6 und Umwerferrolle 3 angeordnet. Die Bowdenzugseele 5C des zweiten Bowdenzuges 5 weist eine Bowdenzuganbindung 5D am Schlosshaken 6 und eine Bowdenzuganbindung 5E an der Umwerferrolle 3 auf. Über zwei Bowdenzugbefestigungen 5A ist der zweite Bowdenzug 5 an der Rückenlehne 4 festgelegt. Zwischen den beiden Bowdenzuganbindungen 5D, 5E läuft die Bowdenzugseele 5C in dem Bowdenzugmantel 5B bis sie kurz vor dem Schlosshaken 6 beziehungsweise der Umwerferrolle 3 austritt.

An der Umwerferrolle 3 greifen somit der erste und der zweite Bowdenzug 2, 5 über die Bowdenzuganbindungen 2E, 5E an.

In der unteren Darstellung der Figur 1 ist passend zur Ausgangslage des Lehnenklappmechanismus der Hebel 7 in seiner Ausgangsposition dargestellt. Der Hebel 7 weist ebenfalls eine Drehachse 7A auf, so dass bei einem Verschwenken des Hebels 7 um die Drehachse 7A eine Betätigung des ersten Bowdenzuges 2 durch Verlagerung der hebelseitigen Bowdenzuganbindung 2D erfolgt. Der Hebel 7 weist gegenüber einem Anschlag an der Karosserie 8 einen Anschlag auf.

Der Schlosshaken 6 ist dabei federunterstützt auf seiner Drehachse drehbar angeordnet, wobei die Federkraft eines nicht dargestellten Federelementes versucht den Schlosshaken 6 stets entgegen seiner Entriegelungsrichtung zu drücken.

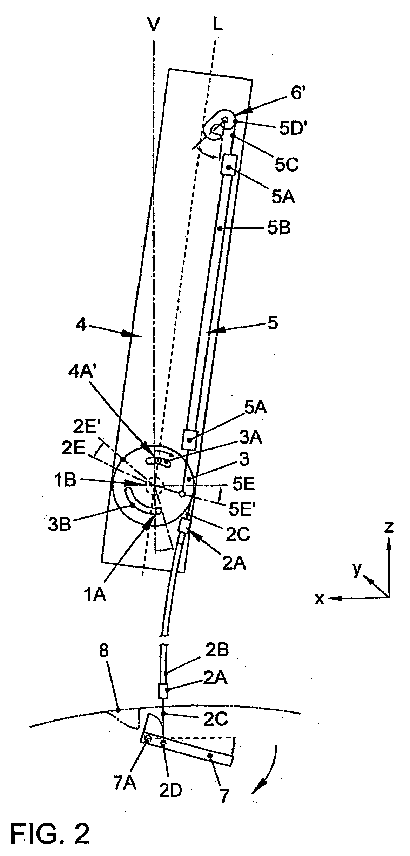

Die in den einzelnen Schritten zur Lehnenklappung vorgesehenen kinematischen Verhältnisse werden in den nachfolgenden Figuren 2, 3 und 4 näher erläutert. Dabei wird auf die Bauteile und die zugehörigen Bezugszeichen eingegangen, die zur Erläuterung der Betätigungsschritte jeweils von Bedeutung sind.

Figur 2 zeigt ebenfalls eine schematische Seitenansicht der Rückenlehne 4 mit dem fern entriegelbaren Lehnenklappmechanismus, nach einem ersten Schritt, durch den zunächst die Entriegelung der Rückenlehne 4 bewirkt wird.

Die Entriegelung der Rückenlehne 4 wird dadurch bewirkt, dass der Hebel 7 um einen vorgebbaren Winkel (gemäß Doppelpfeil der unteren Darstellung der Figur 2) um die Drehachse 7A verlagert wird. Durch die Betätigung des Hebels 7 wird, wie die untere Darstellung der Figur 2 ebenfalls zeigt, die Bowdenzugseele 2C des ersten Bowdenzuges 2 gezogen. Da die Bowdenzugseele 2C an der Bowdenzuganbindung 2E der Umwerferrolle 3 angebunden ist, dreht sich die Umwerferrolle 3 in Uhrzeigerrichtung bis der karosseriefeste Bolzen 1A rechts in der zweiten, unteren Nut 3B anschlägt. Die Umwerferrolle 3 und damit das rechte Ende der zweiten Nut 3B wird um einen vorgebbaren Winkel in Uhrzeigerrichtung verdreht.

Gleichzeitig rückt, wie die Figur 2 in der oberen Darstellung zeigt, die Bowdenzuganbindung 2E des ersten Bowdenzuges 2 in die Position 2E' und die Bowdenzuganbindung 5E des zweiten Bowdenzuges 5 in die Position 5E', wobei diese Verlagerung dem Schwenkwinkel entspricht, der beim kraftarmen, leichten Ziehen des Hebels 7 bis zur Bildung des Anschlages des Bolzens 1A am rechten Ende der zweiten Nut 3B zugelassen wird.

Durch die Verlagerung der Bowdenzuganbindung 5E in die Position 5E' wird der zweite Bowdenzug 5 gezogen, in dem die Bowdenzugseele 5C nach unten gezogen wird. Dadurch verschwenkt der Schlosshaken 6 in die Position 6' um einen vorgebbaren Winkel, da die Bowdenzuganbindung 5D am Schlosshaken 6 derart angebracht ist, dass der Schlosshaken 6 um den vorgebbaren Winkel um seine in γ-Richtung liegende Achse verschwenkt wird. Die Bowdenzuganbindung 5D wandert in die Position 5D' und mit ihm der Schlosshaken 6 in die Position 6', wodurch die Entriegelung der Rückenlehne 4 gegenüber dem bereits erwähnten nicht dargestellten karosserieseitigen Bolzen erfolgt.

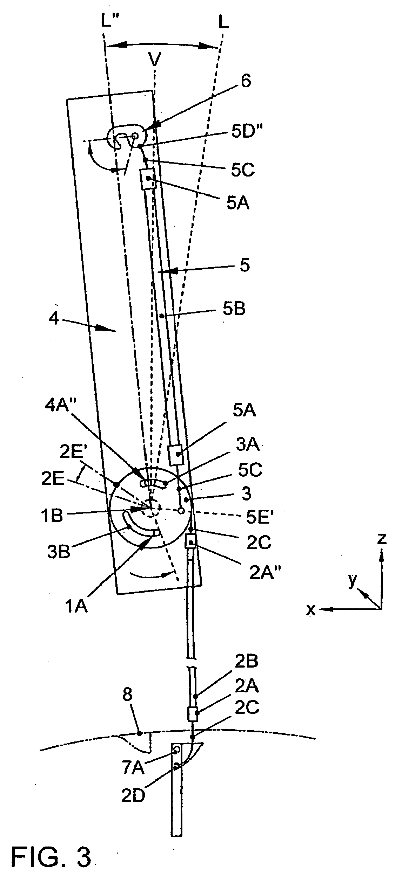

Figur 3 zeigt die Rückenlehne 4 in einer weiteren schematischen Seitenansicht mit dem fern entriegelbaren Lehnenklappmechanismus nach einem zweiten Schritt, der das Anklappen der Rückenlehne 4 über ihren Totpunkt hinaus nach vorn auf ein nicht dargestelltes Sitzteil oder auf den Ladeboden oder in eine Vertiefung eines Ladebodens oder dergleichen ermöglicht.

Figur 3 geht dabei von der Position der Bauteile des Lehnenklappmechanismus in Figur 2 aus, wobei anhand der unteren Darstellung der Figur 3 ersichtlich ist, dass der Hebel 7 durch weiteres, jetzt etwas kraftvolleres, stärkeres Ziehen, als beim ersten Entriegelungsschritt weiter um die um Drehachse 7A verschwenkt worden ist. Der Eintrag einer höheren Kraft als beim ersten Entriegelungsschritt ist notwendig, um die Rückenlehne 4 aus der leicht geneigten Position in die Vertikale V und über ihren Totpunkt hinaus nach vorne in x-Richtung zu kippen. Die Bowdenzugseele 2C des ersten Bowdenzuges 2 wird zur Durchführung des zweiten Anklappschrittes, wie in Figur 3 gezeigt weiter gezogen.

Wie zu Figur 2 erläutert, ist die Umwerferrolle 3 durch den Anschlag in der zweiten Nut 3B begrenzt, nicht mehr weiter in Uhrzeigerrichtung verdrehbar. Da jedoch der erste Bowdenzug 2 mit seinem Bowdenzugmantel 2B einerseits über die Bowdenzuganbindung 2A fest an der Rückenlehne 4 und andererseits mit seiner Bowdenzugseele 2C fest an der Umwerferrolle 3 befestigt ist, führt das weitere Ziehen der Bowdenzugseele 2C durch den Hebel 7 dazu, dass die Rückenlehne 4 um die karosseriefeste Lehnenklappachse 1 C nach vorn in x-Richtung verschwenkt. Es erfolgt eine Krafteinleitung über die Bowdenzuganbindung 2A in die Rückenlehne 4, die dadurch nach vorne in Fahrtrichtung verschwenkt wird. Die Bowdenzuganbindung 2A an der Rückenlehne 4 verlagert sich dabei jedoch nur unwesentlich in die Position 2A".

Während sich der lehnenfeste Bolzen 4A in Figur 2 nach dem ersten Schritt, dem Entriegelungsschritt, noch innerhalb der ersten, oberen Nut 3A in der Position 4A' befindet und dort noch keinen seitlichen Anschlag bildet, liegt der lehnenfeste Bolzen 4A in Figur 3 durch das nach vorn Klappen der Rückenlehne 4 über die Vertikale V hinaus, in die Position der Lehnenachse L", jetzt am linken Ende der ersten, oberen Nut 3A und bildet dort einen Anschlag. Der lehnenfeste Bolzen 4A nimmt somit in Figur 3 in der ersten, oberen Nut 3A die Position 4A" ein. Die Bowdenzuganbindung 5E des zweiten Bowdenzuges 5 befindet sich in Figur 3 weiter unverändert in der Position 5E'. Durch das Klappen der Rückenlehne 4 kommt es aber zwischen den Bowdenzuganbindungen 5D, 5E, wenn auch nur wenig, gleichzeitig zur weiteren Verkürzung der Bowdenzugseele 5C an der Bowdenzuganbindung 5D des zweiten Bowdenzuges 5, die somit die Position 5D" einnimmt. Wie in Figur 3 ersichtlich ist, kommt es somit dazu, dass der Schlosshaken 6 weiter um seine Achse schwenkt und weiter öffnet und schließlich die Position 6" einnimmt. Diese Öffnungsbewegung ist jedoch nicht mehr notwendig, um die Entriegelung der Rückenlehne 4 gegenüber der Karosserie zu ermöglichen.

Wie aus Figur 3 ferner sichtbar wird, ist die Lehnenachse L der Rückenlehne 4 gegenüber der Position der Figur 2 nun in die Position L2" nach vorn in x-Richtung geklappt worden.

Der Schwerpunkt der Rückenlehne 4 ist somit über ihren Totpunkt hinaus verlagert worden, woraufhin nun die Schwerkraft die Lehne 4 in die in Figur 4 gezeigte Position umwirft. Ein Umklappen der Rückenlehne 4 ist somit nach ihrer Entriegelung und ihrem Anklappen ohne ein unterstützendes Federelement möglich.

Figur 4 zeigt eine schematische Seitenansicht der Rückenlehne 4 mit dem fernentriegelbaren Lehnenklappmechanismus nach einem dritten Schritt, nachdem die Rückenlehne 4 schwerkraftunterstützt umgeklappt ist.

Das schwerkraftunterstützte Umklappen der Rückenlehne 4 im dritten Schritt in die im wesentlichen horizontale Position führt dazu, dass der lehnenseitige Bolzen 4A aus der Position 4A" die Umwerferrolle 3 jetzt entgegen der Uhrzeigerrichtung mitnimmt, wodurch der lehnenseitige Bolzen in die Position 4A'" gelangt, da die Rückenlehne 4 mit ihrer Lehnenachse L in der Position L'" in die horizontale Lage umklappt, wobei jetzt gleichzeitig die Bowdenzuganbindung 5E des zweiten Bowdenzuges 5 an der Umwerferrolle 3, direkt aus der Position 5E' der Figuren 2, 3 kommend, ebenfalls entgegen der Uhrzeigerrichtung in die Position 5E"'verlagert wird.

Jedoch verändert sich der Abstand der Bowdenzuganbindungen der Bowdenzugseele 5C ausgehend von den Positionen 5D", 5E' gemäß Figur 3 gegenüber den Positionen 5D"', 5E"' bei dem Umklappschritt nicht. Es verändert sich im Bereich des Schlosshakens 6 nur die Lage der Bowdenzuganbindung 5D, die die Position 5D"' einnimmt. Die Bowdenzuganbindung 5E nimmt die Position 5E"' ein, wobei sich die Umwerferrolle 3 gegenüber der Rückenlehne 4 ein wenig verlagert, wie durch Figurenvergleich der Figuren 3 und 4 an der Positionsänderung 5E' und 5E'" der Bowdenzuganbindung 5E erkennbar ist.

Nach dem Umwerfen der Rückenlehne 4 in die horizontale Position L'" bildet der lehnenseitige Bolzen 4A weiterhin den Anschlag links in der ersten, oberen Nut 3A aus, wobei sich der lehnenseitige Bolzen 4A nach dem Umklappen jetzt in der Position 4A'" befindet. Gleichzeitig liegt der karosserieseitige Bolzen 1A in der horizontalen Lage der Rückenlehne 4 durch das Drehen der Umwerferrolle 3 entgegen der Uhrzeigerrichtung gegenüber Figur 3 weiter links in der zweiten, unteren Nut 3B, bildet dort aber noch keinen Anschlag. Die umwerferseitige Bowdenzuganbindung 2E der Bowdenzugseele 2C des zweiten Bowdenzuges 2 ist ebenfalls in Abhängigkeit der Klappbewegung der Rückenlehne 4 aus der Position 2E' gemeinsam mit der Umwerferrolle 3 weiter entgegen der Uhrzeigerrichtung gedreht und nimmt jetzt aus der Position 2E' der Figuren 2, 3 kommend die Position 2E'" ein. Gleichzeitig ist die lehnenfeste Bowdenzuganbindung 2A aus der Position 2A" der Figur 3 kommend in der Position 2A'" angekommen. Ein Pfeil rechts neben der Umwerferrolle 3 soll diesen Vorgang innerhalb des dritten Schrittes ablaufenden Vorgang gemäß Figur 4 verdeutlichen.

Wie bereits im Zusammenhang mit der Beschreibung der Ausgangslage der Rückenlehne 4 zu Figur 1 erwähnt, ist der Schlosshaken 6 federunterstützt auf seiner Drehachse drehbar angeordnet, wobei die Federkraft eines Federelementes versucht den Schlosshaken 6 stets entgegen seiner Entriegelungsrichtung in seiner ursprüngliche Verriegelungsposition zu drücken.

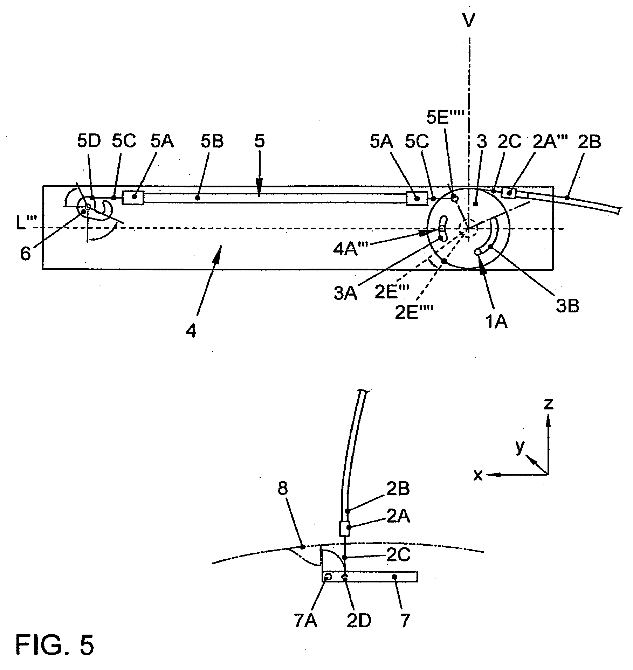

Figur 5 zeigt in einem vierten Schritt die Funktionsweise des Lehnenklappmechanismus nach dem Loslassen des Hebels 7 durch den Bediener, wodurch der Schlosshaken 6 durch Drehung entgegen der Uhrzeigerrichtung federunterstützt relativ zur Rückenlehne 10 in seine in Figur 1 gezeigte Ausgangslage zurückkehrt. Der Hebel 7 nimmt mit seinem Anschlag, wie in Figur 5 unten dargestellt, wieder die für eine erneute Bedienung vorgesehene Ausgangslage am. karosserieseitigen Anschlag ein, die somit der Ausgangsposition der Figur 1 entspricht.

Beim federunterstützten Drehen des Schlosshakens 6 entgegen der Uhrzeigerrichtung verkürzt sich die Bowdenzugseele 5C des zweiten Bowdenzuges 5 an der Umwerferrolle 3, so dass die umwerferseitige Bowdenzuganbindung 5E die Position 5E"" einnimmt. Dadurch dreht sich die Umwerferrolle 3 ein weiteres mal entgegen der Uhrzeigerrichtung weiter, so dass sich die umwerferseitige Bowdenzugseele 2C weiter verlängert, wodurch die umwerferseitige Bowdenzuganbindung 2E des zweiten Bowdenzuges 2 die Position 2E"" einnimmt. Der karosseriefeste Bolzen 1A bildet jetzt in der zweiten Nut 3B einen linken Anschlag aus. Der rückenlehnenseitige Bolzen 4A hingegen liegt schließlich nicht mehr wie in Figur 4 am linken Anschlag der ersten Nut 3A sondern wie Figur 5 zeigt nahezu in der Mitte der ersten Nut 3A der Umwerferrolle 3.

Nachdem innerhalb des vierten Schrittes der Hebel 7 losgelassen worden ist, kann in einem fünften Schritt das Aufrichten der Rückenlehne 4 zurück in die Ausgangslage der Figur 1 erfolgen, wobei dazu die Rückenlehne 4 selbst an einer nicht dargestellten Handhabe ergriffen und entgegen der Umklapprichtung um die Lehnenklappachse 1 B zurückgeklappt wird.

Wird die Rückenlehne 4 in Uhrzeigerrichtung um die Lehnenklappachse 1B zurückgeschwenkt (nicht dargestellt), kehrt einerseits die Bowdenzugseele 2C als auch andererseits der auf der Bowdenzugseele 2C laufende an der Rückenlehne 4 durch die Bowdenzuganbindung 2A angebundene Bowdenzugmantel 2B aus der Position 2A'" (Figuren 4 und 5) wieder in seine Ausgangposition 2A (Figur 1) zurück. Die Bowdenzugseele 2C will sich beim Aufrichten der Rückenlehne 4 umwerferseitig verlängern, dies ist aber nicht möglich, da der Hebel 7 bereits in seiner Ausgangslage gemäß den Figuren 1 und 5 angekommen ist. Dadurch wird beim Aufrichten der Rückenlehne 4 unabhängig von dem in der ersten, oberen Nut 3A angeordneten rückenlehnenseitigen Bolzen 4A, dessen Lage sich beim Aufrichten innerhalb der Nut 3A nicht verändert, sofort beim Beginn des Aufrichten der Rückenlehne 4 zwangsweise die Umwerferrolle 3 in Uhrzeigerrichtung mitgedreht. Der karosseriefeste Bolzen 1A hingegen durchläuft.beim Aufrichten der Rückenlehne 4 die zweite, untere Nut 3B. Die erste und zweite Nut 3A, 3B der Umwerferrolle 3 sind nach dem Aufrichten der Rückenlehne wieder in der in Figur 1 gezeigten Position, wobei die jeweiligen Bolzen 1A, 4A innerhalb der Nuten 3A, 3B in ihrer Ausgangspositionen, wie in Figur 1 dargestellt, angeordnet sind.

Die genaue Endposition der Rückenlehne, das heißt, die zum Sitzen vorgesehene Einbaulage der Rückenlehne 4, wird durch den nicht dargestellten karosseriefesten Verriegelungsbolzen bestimmt, in den der Schlosshaken 6 ausgehend von seiner zurückgestellten Lage gemäß Figur 5 entgegen der Kraft des Federelementes in den Verriegelungsbolzen einschnappt.

Aus den Figuren 1 bis 5 wird ersichtlich, dass die seitliche Anbindung der Umwerferrolle 3, die sehr schmal ausführbar ist, besonders platzsparend ist. Eine Klappfeder zum Umlegen der Rückenlehne 4, die eine größeren Platzbedarf benötigt, ist bei dieser Lösung nicht notwendig.

Eine relativ große und zur notwendigen Kraftübertragung notwendigerweise robuste und teure Klappfeder kann somit eingespart werden.

Die Bedienung über den Hebel 7 kann ferner vorteilhaft von einer vom Bediener gewünschten und gut zu ereichenden Position überall im Fahrzeug erfolgen, wobei ausgehend von einer möglichen nahen Anordnung an der Rückenlehne 4 eine Verlegung des ersten Bowdenzuges 2 mit dem daran angeordneten Hebel 7 weit nach hinten in den Kofferraum genauso denkbar ist, wie eine Verlegung weit nach vorn zum Fahrer- oder Beifahrersitz.

Wie beschrieben sind die Kräfte, die bei der Rückenlehnenklappung benötigt werden, über den Klappwinkel nicht konstant und teilweise sogar sehr stark schwankend. Stellenweise werden sehr hohe Kräfte benötigt. Der erfindungsgemäße Lehnenklappmechanismus hat den Vorteil, dass Schwankungen hinsichtlich der benötigten Kräfte durch die Kraftübertragung vom Hebel 7, über den zweiten Bowdenzug 5 auf die Umwerferrolle 3 und von dort auf die Rückenlehne 4 durch den manuell einbringbaren Krafteintrag den Schwankungen anpassbar ist, wobei durch die rollenartige Umsetzung außerdem eine kraftsparende Lösung geschaffen worden ist.

Die Bedienrichtung des Hebels 7 ist zur Bewirkung der Umklappbewegung, wie zumeist im Fahrzeug in x-Richtung üblich, im dreidimensionalen Raum frei wählbar, so dass eine Verlagerung des Hebels 7 in eine der drei Raumrichtungen oder auch dazwischen möglich ist.

Nicht dargestellt sind folgende Modifikationen des fernentriegelbaren Lehnenklappmechanismus.

Anstatt einer kreisrunden Umwerferrolle 3 kann eine Umwerferrolle 3 mit variablem Radius verwendet werden. Somit können die hohen Anfangskräfte, insbesondere im zweiten Anklappschritt zum Anklappen der Rückenlehne 4 aus der nach hinten geneigten Position nach vorn über ihren Totpunkt hinaus, in die Position L" der Figur 3, einfacher bewältigt werden.

Anstatt des ersten Bowdenzuges 2, der für die Initiierung des ersten und zweiten Schrittes zuständig ist, könnte auch ein motorischer Antrieb verwendet werden, der die Umwerferrolle 3 über ein rückstellbares Getriebe antreibt.

Die Verriegelungseinheit der Rückenlehne 4 kann derart ausgeführt sein, dass sich beim Entriegeln des Lehnenschlosses, der als Ver- und Entriegelungselement dienende Schlosshaken 6, die Rückenlehne 4 schon ein paar Grad nach vorn klappt, indem sich der Schlosshaken 6, 6' im dem ersten Entriegelungsschritt durch seine Drehung gegen den karosseriefesten Bolzen drückt:
Die Rückenlehne 4 könnte zudem in einer alternativen Ausführung mit einer Spiralfeder vorgespannt werden, so dass die Umklappbewegung entgegen der bisherigen Beschreibung in Kombination mit dem beschriebenen Lehnenklappmechanismus in einer ersten Variante zusätzlich zumindest federunterstützt anklappt und schwerkraftunterstützt umklappt oder in einer zweiten Variante federunterstützt anklappt und federunterstützt und schwerkraftunterstützt umklappt.

### Bezugszeichenliste

- 1A: Bolzen - karosseriefest
- 1B: Lehnenklappachse
- 2: erster Bowdenzug
- 2A: Bowdenzugbefestigung
- 2B: Bowdenzugmantel
- 2C: Bowdenzugseele
- 2D: Bowdenzuganbindung - hebelseitig
- 2E: Bowdenzuganbindung - umwerferseitig
- 3: Umwerferrolle
- 3A: erste Nut
- 3B: zweite Nut
- 4: Rückenlehne
- 4A: Bolzen - lehnenfest
- 5: Zugelement/zweiter Bowdenzug
- 5A: Bowdenzugbefestigung
- 5B: Bowdenzugmantel
- 5C: Bowdenzugseele
- 5D: Bowdenzuganbindung -schlossseitig
- 5E: Bowdenzuganbindung - umwerferseitig
- 6: Ver- und Entriegelungselement - Schlosshaken
- 7: Betätigungselement - Hebel
- 7A: Drehachse
- 8: Karosseriemulde für Hebel 7
- V: vertikale Achse
- L: Lehnenachse
- ': erster Schritt - Entriegelungsschritt
- ": zweiter Schritt - Anklappschritt
- '": dritter Schritt - Umklappschritt
- "": vierter Schritt - Aufrichtschritt

## Patentansprüche

1. Lehnenklappmechanismus für einen Fahrzeugsitz, mit einer Rückenlehne (4), insbesondere einer ein- oder mehrteiligen Hintersitzlehne, wobei der Lehnenklappmechanismus ein fern von der Rückenlehne (4) angeordnetes Betätigungselement (7) aufweist, das auf den Lehnenklappmechanismus einwirkt, um ein Ver- und Entriegelungselement (6) der Rückenlehne (4) gegenüber einem mit dem Ver- und Entriegelungselement (6) in Wirkverbindung stehenden karosserieseitigen Halteelement fern zu entriegeln, wonach die Rückenlehne (4) aus einer im Wesentlichen vertikalen oder gegenüber einer Vertikalen (V) leicht geneigten Ausgangsposition in eine Umklappposition bringbar ist, **dadurch gekennzeichnet, dass** die Verlagerung des Betätigungselementes (7) zunächst in einem Entriegelungsschritt (') der Rückenlehne (4) über einen ersten Bowdenzug (2) auf einen an der Rückenlehne (4) angeordneten Umwerfer (3) einwirkt, der gleichzeitig ein zwischen dem Umwerfer (3) und dem Ver- und Entriegelungselement (6) angeordnetes Zugelement (5) mitnimmt und die sich noch in der Ausgangsposition befindende Rückenlehne (4) fernentriegelt, wonach eine weitere Verlagerung des Betätigungselementes (7) in einem Anklappschritt (") der Rückenlehne (4) über den ersten Bowdenzug (2) nochmals derart auf den Umwerfer (3) einwirkt, dass der Umwerfer (3) die Rückenlehne (4) über ihren vertikalen Totpunkt hinaus kippt, wodurch die Rückenlehne (4) in einem nachfolgenden Umklappschritt ("') in die Umklappposition umgeworfen wird, wobei der Umwerfer (3) eine Umwerferrolle ist, die seitlich .der Rückenlehne (4) auf einer quer zur Fahrtrichtung (γ-Richtung) liegenden karosseriefesten Achse (1B) der Rückenlehne (4) in bestimmten Grenzen gegenüber einer Karosserie und gegenüber der Rückenlehne (4) frei drehbar angeordnet ist.

2. Lehnenklappmechanismus nach Anspruch 1, **dadurch gekennzeichnet, dass** die Umwerferrolle (3) eine erste, obere Nut (3A) aufweist, in die ein lehnenfester Bolzen (4A) eingreift und eine zweite, untere Nut (3B) aufweist, in die ein karosseriefester Bolzen (1A) eingreift, wobei die Bolzen (1A, 4A) bei der Betätigung des Lehnenklappmechanismus jeweils beidseitig in den zugehörigen Nuten (3A, 3B) Anschläge bilden, die eine Drehung der Umwerferrolle (3) gegenüber der Karosserie und gegenüber der Rückenlehne (4) begrenzen.

3. Lehnenklappmechanismus nach Anspruch 1, **dadurch gekennzeichnet, dass** die Bowdenzugseele (2C) des ersten Bowdenzuges (2) über Bowdenzuganbindungen (2D, 2E) einerseits mit dem Betätigungselement (7) und andererseits mit dem Umwerfer (3) verbunden ist, während der Bowdenzugmantel (2B) des ersten Bowdenzuges (2) über mindestens eine Bowdenzugbefestigung (2A) an der schwenkbaren Rückenlehne (4) befestigt ist.

4. Lehnenklappmechanismus nach Anspruch 1, **dadurch gekennzeichnet, dass** das Zugelement ein zweiter Bowdenzug (5) ist, wobei die Bowdenzugseele (5C) des zweiten Bowdenzuges (5) über Bowdenzuganbindungen (5D, 5E) einerseits mit dem Ver- und Entriegelungselement (6) und andererseits mit dem Umwerfer (3) verbünden ist, während der Bowdenzugmantel (5B) des zweiten Bowdenzuges (5) über mindestens eine Bowdenzugbefestigung (5A) an der schwenkbaren Rückenlehne (4) befestigt ist.

5. Lehnenklappmechanismus nach Anspruch 2, **dadurch gekennzeichnet, dass** die Betätigungsrichtung des Betätigungselementes (7), insbesondere eines Hebels, im dreidimensionalen Raum frei wählbar ist und die Betätigungsrichtung sowohl unabhängig von der gewünschten Richtung der Entriegelungsbewegung des Verund Entriegelungselementes (6) gegenüber dem Haltelement als auch unabhängig von der Anklapprichtung der Rückenlehne (4) ist, da die Betätigung des Betätigungselementes (7) auf den mit dem ersten Bowdenzug (2) verbundenen Umwerfer (3) einwirkt, der die Kraft und die Kraftrichtung des ersten Bowdenzuges (2) über den Umwerfer (3) und das Zugelement (5) auf das Ver- und Entriegelungselement (6) und über die in die Nuten (3A, 3B) des Umwerfers (3) eingreifenden Bolzen (1A, 4A) auf die Rückenlehne (4) umlenkt.

## Claims

1. Backrest folding mechanism for a vehicle seat, with a backrest (4), in particular a single- or multi-part rear seat backrest, wherein the backrest folding mechanism has an actuating element (7) which is arranged remotely from the backrest (4) and acts on the backrest folding mechanism in order to remotely unlock a locking and unlocking element (6) of the backrest (4) in relation to a bodywork-side holding element which is operatively connected to the locking and unlocking element (6), after which the backrest (4) can be brought from a starting position which is substantially vertical or is slightly inclined in relation to a vertical (V) into a folded-over position, **characterized in that** the shifting of the actuating element (7) firstly in an unlocking step (') of the backrest (4) acts via a first Bowden cable (2) on a dérailleur (3) which is arranged on the backrest (4), at the same time carries along a tension element (5) arranged between the dérailleur (3) and the locking and unlocking element (6) and remotely unlocks the backrest (4), which is still in the starting position, after which a further shifting of the actuating element (7) in a folding-down step (") of the backrest (4) via the first Bowden cable (2) once again acts on the dérailleur (3) in such a manner that the dérailleur (3) tilts the backrest (4) beyond its vertical dead centre, as a result of which the backrest (4) is overturned in a subsequent folding-over step ("') into the folded-over position, wherein the dérailleur (3) is a dérailleur roller which is arranged to the side of the backrest (4) on a bodywork-mounted axis (1B) of the backrest (4), which axis lies transversely with respect to the direction of travel (y direction), so as to be freely rotatable within certain limits in relation to a bodywork and in relation to the backrest (4).

2. Backrest folding mechanism according to Claim 1, **characterized in that** the derailleur roller (3) has a first upper groove (3A) in which a backrest-mounted bolt (4A) engages, and has a second lower groove (3B) in which a bodywork-mounted bolt (1A) engages, wherein, when the backrest folding mechanism is actuated, the bolts (1A, 4A) in each case on both sides form stops in the associated grooves (3A, 3B), the stops limiting a rotation of the dérailleur roller (3) in relation to the bodywork and in relation to the backrest (4).

3. Backrest folding mechanism according to Claim 1, **characterized in that** the Bowden cable core (2C) of the first Bowden cable (2) is connected via Bowden cable connections (2D, 2E) firstly to the actuating element (7) and secondly to the dérailleur (3) while the Bowden cable sheath (2B) of the first Bowden cable (2) is fastened to the pivotable backrest (4) via at least one Bowden cable fastening (2A).

4. Backrest folding mechanism according to Claim 1, **characterized in that** the tension element is a second Bowden cable (5), wherein the Bowden cable core (5C) of the second Bowden cable (5) is connected via Bowden cable connections (5D, 5E) firstly to the locking and unlocking element (6) and secondly to the dérailleur (3) while the Bowden cable sheath (5B) of the second Bowden cable (5) is fastened to the pivotable backrest (4) via at least one Bowden cable fastening (5A).

5. Backrest folding mechanism according to Claim 2, **characterized in that** the actuating direction of the actuating element (7), in particular a lever, is freely selectable three-dimensionally and the actuating direction is both independent of the desired direction of the unlocking movement of the locking and unlocking element (6) in relation to the holding element and also independent of the folding-down direction of the backrest (4) since the actuation of the actuating element (7) acts on the dérailleur (3) which is connected to the first Bowden cable (2) and deflects the force and the direction of force of the first Bowden cable (2) via the dérailleur (3) and the tension element (5) to the locking and unlocking element (6) and via the bolts (1A, 4A) engaging in the grooves (3A, 3B) of the dérailleur (3) to the backrest (4).

## Revendications

1. Mécanisme de rabattement de dossier pour un siège de véhicule, comprenant un dossier (4), en particulier un dossier de siège arrière en une ou plusieurs parties, le mécanisme de rabattement de dossier présentant un élément d'actionnement (7) disposé à distance du dossier (4), qui agit sur le mécanisme de rabattement de dossier, afin de déverrouiller à distance un élément de verrouillage et de déverrouillage (6) du dossier (4) par rapport à un élément de fixation du côté de la carrosserie en liaison fonctionnelle avec l'élément de verrouillage et de déverrouillage (6), après quoi le dossier (4) peut être amené depuis une position de départ essentiellement verticale ou légèrement inclinée par rapport à la verticale (V) dans une position rabattue, **caractérisé en ce que** le déplacement de l'élément d'actionnement (7) agit d'abord dans une étape de déverrouillage (') du dossier (4) par le biais d'un premier câble Bowden (2) sur un dérailleur (3) disposé sur le dossier (4), qui entraîne simultanément un élément de traction (5) disposé entre le dérailleur (3) et l'élément de verrouillage et de déverrouillage (6) et déverrouille à distance le dossier (4) se trouvant encore dans la position de départ, après quoi un déplacement supplémentaire de l'élément d'actionnement (7), dans une étape de rabattement (") du dossier (4), agit encore une fois sur le dérailleur (3) par le biais du premier câble Bowden (2) de telle sorte que le dérailleur (3) fasse basculer le dossier (4) au-delà de son point mort vertical, de sorte que le dossier (4), dans une étape de rabattement subséquente ("') soit commuté dans la position de rabattement, le dérailleur (3) étant une poulie de dérailleur qui est disposée de manière librement rotative latéralement au dossier (4) sur un axe (1B) du dossier (4) fixé à la carrosserie situé transversalement à la direction de conduite (direction y) dans des limites déterminées par rapport à une carrosserie et par rapport au dossier (4).

2. Mécanisme de rabattement de dossier selon la revendication 1, **caractérisé en ce que** la poulie de dérailleur (3) présente une première rainure supérieure (3A) dans laquelle s'engage un boulon fixé au dossier (4A) et présente une deuxième rainure inférieure (3B), dans laquelle s'engage un boulon fixé à la carrosserie (1A), les boulons (1A, 4A), lors de l'actionnement du mécanisme de rabattement de dossier, formant à chaque fois des deux côtés des butées dans les rainures associées (3A, 3B), qui limitent une rotation de la poulie de dérailleur (3) par rapport à la carrosserie et par rapport au dossier (4).

3. Mécanisme de rabattement de dossier selon la revendication 1, **caractérisé en ce que** le brin du câble Bowden (2C) du premier câble Bowden (2) est connecté par le biais de liaisons de câble Bowden (2D, 2E) d'une part à l'élément d'actionnement (7) et d'autre part au dérailleur (3), tandis que la gaine du câble Bowden (2B) du premier câble Bowden (2) est fixée par le biais d'au moins une fixation de câble Bowden (2A) au dossier pivotant (4).

4. Mécanisme de rabattement de dossier selon la revendication 1, **caractérisé en ce que** l'élément de traction est un deuxième câble Bowden (5), le brin du câble Bowden (5C) du deuxième câble Bowden (5) étant connecté par le biais de liaisons de câble Bowden (5D, 5E) d'une part à l'élément de verrouillage et de déverrouillage (6) et d'autre part au dérailleur (3), tandis que la gaine du câble Bowden (5B) du deuxième câble Bowden (5) est fixée par le biais d'au moins une fixation de câble Bowden (5A) au dossier pivotant (4).

5. Mécanisme de rabattement de dossier selon la revendication 2, **caractérisé en ce que** la direction d'actionnement de l'élément d'actionnement (7), en particulier d'un levier, peut être choisie librement dans l'espace tridimensionnel et la direction d'actionnement est à la fois indépendante de la direction souhaitée du mouvement de déverrouillage de l'élément de verrouillage et de déverrouillage (6) par rapport à l'élément de fixation et indépendante de la direction de rabattement du dossier (4), car l'actionnement de l'élément d'actionnement (7) agit sur le dérailleur (3) connecté au premier câble Bowden (2), qui dévie la force et la direction de la force du premier câble Bowden (2) par le biais du dérailleur (3) et de l'élément de traction (5) vers l'élément de verrouillage et de déverrouillage (6) et par le biais des boulons (1A, 4A) s'engageant dans les rainures (3A, 3B) du dérailleur (3) vers le dossier (4).
